# EUROPÄISCHE PATENTANMELDUNG

(11) **EP 2 950 176 A1**
(43) Veröffentlichungstag der Anmeldung: **02.12.2015**
(21) Anmeldenummer: 14170259.7
(22) Anmeldetag: 28.05.2014
(51) Int. Cl.: G05B 23/02

(54) **Verfahren und Automatisierungskomponente zur Generierung einer Ereignismeldung**

(71) Anmelder: Siemens Aktiengesellschaft, 80333 München (DE)
(72) Erfinder: Bergner, Bernd, 91336 Heroldsbach (DE); Helmig, Dieter, 90475 Nürnberg (DE); Ohlmann, Joachim, 91074 Herzogenaurach (DE)

(57) **Zusammenfassung**

Die Erfindung betrifft ein Verfahren und eine Automatisierungskomponente zur Generierung einer Ereignismeldung durch eine Automatisierungskomponente (AK1, AK2) einer industriellen Automatisierungsanordnung, wobei zumindest ein Zustandsparameter der Automatisierungsanordnung durch die Automatisierungskomponente überwacht wird, wobei für den Zustandsparameter zumindest ein Grenzwert definiert wird, und wobei bei einer Verletzung des Grenzwertes die Ereignismeldung erzeugt und für eine Meldeeinrichtung bereitgestellt wird. Dabei wird für den zumindest einen Zustandsparameter eine maximale Häufigkeit und/oder eine Maximaldauer der Verletzung des Grenzwertes bezogen auf ein Zeitintervall definiert, wobei die Ereignismeldung dann erzeugt wird, wenn in dem Zeitintervall die maximale Häufigkeit und/oder die Maximaldauer der Verletzung des Grenzwertes erreicht oder überschritten wird. Damit wird die Erkennung sporadischer Fehler durch Bildung einer "Sammelfehlermeldung" vereinfacht, wodurch auch die Wartung einer Automatisierungsanordnung vereinfacht wird.

## Beschreibung

Die Erfindung betrifft ein Verfahren zur Generierung einer Ereignismeldung in einer industriellen Automatisierungsanordnung gemäß dem Oberbegriff des Patentanspruchs 1, und eine Automatisierungskomponente zur Generierung der Ereignismeldung gemäß dem Oberbegriff des Patentanspruchs 10.

In der industriellen Automatisierungstechnik werden zur automatischen Produktion von Waren und zur Steuerung chemischer oder biologischer Prozesse Automatisierungskomponenten eingesetzt, die regelmäßig mikroprozessorgesteuert sind, wobei deren Funktion innerhalb der Automatisierungsanordnung im Wesentlichen durch eine Software definiert ist. Regelmäßig sind eine Vielzahl solcher Automatisierungskomponenten einerseits mit Bedien- und Beobachtungsgeräten, Überwachungseinrichtungen und dergleichen verbunden, und andererseits sind die Automatisierungskomponenten regelmäßig mit Sensoren und Aktoren verknüpft, die Auskunft geben über den gesteuerten Prozess und die andererseits in den gesteuerten Prozess bzw. die gesteuerte Automatisierungsaufgabe eingreifen können. Die Automatisierungskomponenten arbeiten dabei innerhalb der spezifizierten Parameter ihrer Programmierung weitgehend autonom, versorgen aber die angeschlossenen Einheiten, insbesondere die Bedien- und Beobachtungsgeräte, mit einer Vielzahl von Daten, insbesondere Zustandsinformationen und Zustandsparameter, die von den angeschlossenen Geräten entweder visualisiert werden, oder hinsichtlich Grenzwertüberschreitungen oder dergleichen überwacht werden.

Für verschiedene Zustandsparameter werden regelmäßig Grenzwerte vorgegeben, wobei nur dann eine Meldung (beispielsweise ein Datentelegramm) mit einem Wert des Zustandsparameters oder mit einer Information über die Grenzwertverletzung von der industriellen Automatisierungskomponente versendet wird, wenn auch tatsächlich eine solche Grenzwertverletzung stattgefunden hat. Eine solche Meldung wird oft als Fehler- oder Ereignismeldung bezeichnet.

Ein Bediener einer Anlage, der beispielsweise mittels eines der geschilderten Bedien- und Beobachtungsgeräte mit einer Vielzahl solcher sporadischen Fehlermeldungen oder Ereignismeldungen konfrontiert wird, hat häufig Mühe, zwischen tolerierbaren und nicht-tolerierbaren Fehler- oder Ereignismeldungen zu unterscheiden. Deswegen gehen viele Bediener solcher Einrichtungen dazu über, die Fehler- oder Ereignismeldungen verschiedener Parameter oder Parameter-Gruppen in einer Datenbank zu sammeln, wobei erst im Fehlerfall, also bei einer tatsächlichen gravierenden Störung der Automatisierungsanordnung, versucht wird, diese gesammelten Daten mit Hilfe statistischer Methoden auszuwerten. Dies hat jedoch zum Nachteil, dass zum Einen auch beim weitgehend störungsfreien Betrieb der Automatisierungsanordnung sehr viele Ereignismeldungen ausgewertet werden müssen, und zum Anderen ergibt sich der Nachteil, dass eine solche Auswertung erst nach Auftreten einer gravierenden Störung, also "offline" erfolgt.

Es ist daher eine Aufgabe der vorliegenden Erfindung, die Generierung von Ereignismeldungen in industriellen Automatisierungsanordnungen zu verbessern.

Es ist dabei eine Kernidee zur Lösung der erfindungsgemäßen Aufgabe, dass eine Bedienperson oder ein Instandhalter über separate Hinweise, also eine (zusätzliche) Ereignismeldung oder "Maintenance Alert", darauf aufmerksam gemacht wird, dass in einem bestimmten Zeitraster oder Zeitintervall ein bestimmter Fehler häufiger aufgetreten ist.

Die Aufgabe wird insbesondere durch ein Verfahren gemäß Patentanspruch 1 und durch eine Automatisierungskomponente gemäß Patentanspruch 10 gelöst.

Dabei wird ein Verfahren zur Generierung einer Ereignismeldung durch eine Automatisierungskomponente einer industriellen Automatisierungsanordnung vorgeschlagen, wobei zumindest ein Zustandsparameter der Automatisierungsanordnung durch die Automatisierungskomponente überwacht wird, wobei für den Zustandsparameter zumindest ein Grenzwert definiert wird, und wobei bei einer Verletzung des Grenzwertes die Ereignismeldung erzeugt und für eine Meldeeinrichtung bereitgestellt wird. Dabei wird für den zumindest einen Zustandsparameter eine maximale Häufigkeit und/oder eine Maximaldauer der Verletzung des Grenzwertes, vorzugsweise bezogen auf ein Zeitintervall, definiert, wobei die Ereignismeldung dann erzeugt wird, wenn in dem Zeitintervall die maximale Häufigkeit und/oder die Maximaldauer der Verletzung des Grenzwertes erreicht oder überschritten wird. Mittels eines solchen Verfahrens wird die Erkennung sporadischer Fehler durch Bildung einer zusätzlichen "Hinweismeldung" vereinfacht, wodurch auch die Wartung einer Automatisierungsanordnung vereinfacht wird.

Die Aufgabe wird außerdem durch eine Automatisierungskomponente zum Einsatz in einer industriellen Automatisierungsanordnung gelöst, wobei die Automatisierungskomponente zur Überwachung zumindest eines Zustandsparameters hinsichtlich zumindest eines Grenzwertes eingerichtet ist. Dabei wird die Automatisierungskomponente mit einer Überwachungssoftware zur vorzugsweise auf ein Zeitintervall bezogenen Überwachung des zumindest einen Zustandsparameters und zur Generierung zumindest einer Ereignismeldung resultierend aus der Überwachung gemäß einem der vorstehend beschriebenen Verfahren ausgestattet. Durch eine solche Automatisierungskomponente können diejenigen Vorteile realisiert werden, die bereits anhand des erfindungsgemäßen Verfahrens diskutiert wurden.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Automatisierungskomponente. Die vorteilhaften Ausgestaltungen können sowohl einzeln als auch in Kombination miteinander realisiert werden.

In einer vorteilhaften Ausgestaltung wird eine Anzahl Zustandsparameter und die Verletzung jeweils zugeordneter Grenzwerte überwacht, wobei vorteilhaft die Zustandsparameter und die zugehörigen Grenzwerte verschiedenen Fehlertypen zugeordnet werden. Damit ist es möglich, die zugrunde zu legenden Zeitintervalle und gegebenenfalls auch Grenzwerte für eine maximale Häufigkeit, eine Maximaldauer und dergleichen jeweils für eine ganze Gruppe von zu überwachenden Zustandsparametern und damit getrennt für Fehlertypen gemeinsam zu definieren. Dadurch kann der Administrationsaufwand verringert werden, weil nicht mehr für jeden einzelnen Zustandsparameter das Verfahren einzeln parametriert werden muss.

Ein wichtiger Anwendungsfall ist gegeben, wenn als Zustandsparameter eine Verfügbarkeit oder eine Blockierung einer Kommunikationsverbindung oder eines verwendeten Netzsegmentes oder dergleichen überwacht wird. Dies ist insbesondere dann wichtig, wenn über die entsprechende Kommunikationsverbindung oder das entsprechende Netzsegment sicherheitskritische Telegramme übertragen werden müssen, beispielsweise bei fehlersicheren Automatisierungsanordnungen oder dergleichen. So kann beispielsweise überwacht werden, dass eine Belegung eines entsprechenden Netzsegmentes oder einer entsprechenden Kommunikationsverbindung in regelmäßigen Zeitabständen unterbrochen sein muss.

Vorteilhaft wird die gemäß dem beschriebenen Verfahren erzeugte Ereignismeldung einem Bedien- und Beobachtungsgerät der industriellen Automatisierungsanordnung übermittelt oder einem solchen zum Abruf bereitgestellt, wobei alternativ oder auch zusätzlich eine Übermittlung der Ereignismeldung an eine weitere Komponente, beispielsweise an ein MES-System (Manufacturing Execution System) oder ein SCADA-System (Supervisory Control And Data Acquisition) erfolgen kann. Alternativ kann die Erzeugung und Bereitstellung der Ereignismeldung, also der Zusatzmeldung, auch außerhalb der betroffenen Automatisierungskomponente durchgeführt werden, insbesondere auch mittels einer entsprechenden Software-Komponente des "Zielgerätes", also eines Bedien- und Beobachtungsgerätes, eines MES- oder SCADA-Systems oder dergleichen.

In einer vorteilhaften Ausgestaltung können für die erfindungsgemäß erzeugten Ereignismeldungen, die also beispielsweise aufgrund einer bestimmten Häufigkeit eines Fehlers oder einer Grenzwertverletzung innerhalb eines bestimmten Zeitraumes erzeugt wurden, die mit diesem Ereignis regulär mit jedem Fehler oder jeder einzelnen Grenzwertverletzung erzeugten Ereignismeldungen unterdrückt werden. Dies bedeutet, dass sporadische Fehler, die mit einer tolerierbaren Häufigkeit oder Dauer auftreten, überhaupt nicht gemeldet und angezeigt werden, was eine Bedienperson, ein Übertragungsmedium (Netzwerk) und einen Protokollspeicher (Fehler-Log) entsprechend entlasten kann. Umgekehrt können die erfindungsgemäß erzeugten "zusätzlichen" Ereignismeldungen auch neben den gemäß dem Stand der Technik erzeugten "einzelnen" Ereignismeldungen erzeugt und bereitgestellt werden.

Eine besonders einfache und weitgehend automatische Parametrierung des Verfahrens ist möglich, indem die auf das Zeitintervall bezogene Verletzung des Grenzwertes während eines Probe- oder Trainingsbetriebes, der vorzugsweise störungsfrei abläuft, ermittelt werden, wobei durch eine Skalierung der ermittelten Häufigkeit und/oder einer ermittelten Dauer der Verletzung eines Grenzwertes die für das System forthin geltende maximale Häufigkeit und/oder Maximaldauer für einen anschließenden Produktivbetrieb ermittelt werden kann. Eine solche Skalierung verwendet in einem einfachen Fall einen Skalierungsfaktor, der derart bemessen ist, dass auch geringfügige Überschreitungen der im Probebetrieb ermittelten Werte noch nicht zu einer unnötigen Generierung von Ereignismeldungen führen, andererseits jedoch eine gravierende "Verschlechterung" im Produktivbetrieb sehr wohl gemeldet wird. Ausführungsbeispiele des erfindungsgemäßen Verfahrens werden nachfolgend anhand der Zeichnungen erläutert. Dabei wird gleichzeitig eine erfindungsgemäße Automatisierungskomponente beschrieben.

Dabei zeigen:
- Figur 1: in schematischer Darstellung eine Automatisierungsanordnung aus zwei Automatisierungskomponenten, einem Bedien- und Beobachtungsgerät, einem Sensor und einem Aktor, und
- Figuren 2 - 4: in schematischer Darstellung eine Anordnung aus einem Bedien- und Beobachtungsgerät, einem Kommunikationsprozessor und daran angeschlossenen Kommunikationskomponenten.

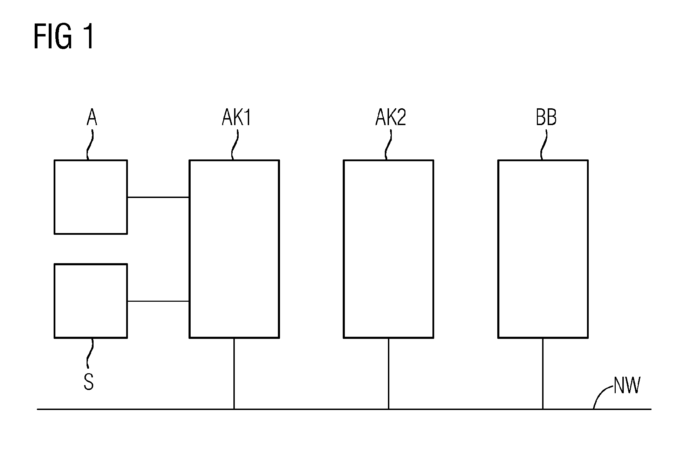

Die Figur 1 zeigt in schematischer Darstellung eine Automatisierungsanordnung aus zwei Automatisierungskomponenten, einem Bedien- und Beobachtungsgerät, einem Sensor und einem Aktor, wobei die Automatisierungskomponenten und das Bedien- und Beobachtungsgerät mittels eines Netzwerkes kommunikativ verknüpft sind.

Im folgenden sei angenommen, dass in der extrem vereinfacht dargestellten Automatisierungsanordnung eine Automatisierungskomponente AK1 (beispielsweise eine speicherprogrammierbare Steuerung) mit einem Sensor S Prozessdaten erfasst und mit einem Aktor A auf den gesteuerten Prozess Einfluss nimmt. Weiter sei angenommen, dass eine zweite Automatisierungskomponente AK2 regelmäßig mit der Automatisierungskomponente AK1 Daten austauscht, wobei hierbei angenommen sei, dass aus Sicherheitsgründen die Informationen zwischen den beiden Automatisierungskomponenten AK1, AK2 verzögerungsfrei bzw. verzögerungsarm übermittelt werden müssen. An demselben Netzwerk NW (beispielsweise ein ProfiNet oder ein Industrial Ethernet) sind neben den beiden Automatisierungskomponenten AK1, AK2 auch ein Bedien- und Beobachtungsgerät BB, ein sogenanntes HMI-Gerät (HMI = Human Machine Interface) angeknüpft. Die von den Automatisierungskomponenten AK1, AK2 erzeugten Ereignismeldungen werden durch das Bedien- und Beobachtungsgerät BB verarbeitet und dabei insbesondere einem Benutzer visualisiert.

In einem ersten Beispiel für eine Erkennung bzw. Filterung von sporadischen Fehlern soll der Sensor S betrachtet werden, der hier beispielsweise fortwährend Temperaturdaten eines Kessels oder dergleichen überwacht, wobei diese Temperaturdaten von der Automatisierungskomponente AK1 verwendet werden, beispielsweise zur Ansteuerung eines Heizelementes für den Kessel, wobei dies hier durch den Aktor A exemplarisch dargestellt ist. Nun sei angenommen, dass aufgrund von elektromagnetischen Störungen oder durch andere Beeinträchtigungen im industriellen Umfeld die Verbindung zwischen dem Sensor S und der Automatisierungskomponente AK1 zeitweise gestört ist, also zeitweise unterbrochen ist oder unplausible Werte liefert. Eine Filterung des entsprechenden Einganges für den Sensor S an der Automatisierungskomponente AK1 detektiert dabei jede Unterbrechung bzw. jeden unplausiblen Sensorwert, wobei bei jeder solchen Beeinträchtigung durch die Automatisierungskomponente AK1 im Stand der Technik eine entsprechende Fehlermeldung an das Bedien- und Beobachtungsgerät BB gesendet wird. Sobald die Verbindung zu dem Sensor wiederhergestellt ist, wird eine dem entsprechende Meldung erzeugt und ebenfalls an das Bedien- und Beobachtungsgerät BB gesendet, so dass die zuerst ausgegebene "Fehlermeldung" wieder vom Bildschirm gelöscht wird und nur noch durch eine Analyse von Log-Dateien erkennbar wird. Auch in einem solchen, hier angenommenen Betriebsfall, in dem sich die Temperatur des überwachten Kessels nur langsam ändert und somit kurzzeitige Ausfälle des Signals des Sensors S sachlich unerheblich sind, würde eine entsprechende Meldungsflut an dem Bedien- und Beobachtungsgerät BB visualisiert und danach auch wieder von der Anzeigevorrichtung gelöscht werden.

Erfindungsgemäß ist nun eine Verarbeitung dieser Ereignisse in der Automatisierungskomponente AK1 - oder alternativ im Bedien- und Beobachtungsgerät BB - vorgesehen. Eine Unterbrechung der Verbindung zum Sensor S bzw. das Vorliegen eines unplausiblen Wertes wird dabei zunächst einmal in einem gesonderten Zustandsparameter für den Sensor S gespeichert, wobei der Zustandsparameter beispielsweise ein Fehlerzähler ist. Dieser Fehlerzähler kann beispielsweise bei jedem Zyklus der Automatisierungskomponente AK1, während dem ein unplausibler oder fehlender Sensorwert anliegt, um eins hochgezählt werden. Erfindungsgemäß kann jetzt in der Automatisierungskomponente AK1 - oder alternativ im Bedien- und Beobachtungsgerät BB - ein Grenzwert vorgegeben sein, der beispielsweise besagt, dass nach 1000 Zyklen bzw. einer entsprechenden Zeit, die 1000 Zyklen der Automatisierungskomponente AK1 entspricht, der Zustandsparameter maximal 5 betragen darf. Dies bedeutet, dass toleriert wird, dass in dem entsprechenden Zeitfenster (hier: 1000 Zyklen) 995 gültige plausible Sensorwerte vorliegen müssen bzw. 5 Fehlmessungen toleriert werden. Sofern dieser Grenzwert überschritten wird, beispielsweise durch eine dauerhafte Leitungsunterbrechung oder dergleichen, wird eine zusätzliche Ereignismeldung erzeugt, die zum Inhalt hat, dass der Sensor S bzw. dessen Anbindung in unzulässigem Umfang gestört ist. Eine solche zusätzliche Ereignismeldung wird auch als "Maintenance Alert" bezeichnet, weil damit frühzeitig, also auch dann, solange noch kein Ausfall oder eine gravierende Störung aufgetreten ist, auf ein sich möglicherweise vergrößerndes Problem aufmerksam gemacht werden kann, was im vorliegenden Fall beispielsweise eine Kontrolle der elektrischen Verbindung zum Sensor S auslösen würde.

Zur Parametrierung des Verfahrens können neben der klassischen, manuellen Vorgabe von Parametern und Grenzwerten diese Parameter und Grenzwerte auch automatisch parametriert werden. Dazu wird die Fehlerhäufigkeit bezogen auf den Sensor S bzw. die Maximaldauer einer ununterbrochenen Störung des Signals des Sensors S während eines Pilotbetriebes, der insgesamt als zufriedenstellend beurteilt wird, automatisch erfasst. Dabei sei angenommen, dass bezogen auf 1000 Zyklen der Automatisierungskomponente AK1 für den Sensor S maximal 5 Störungen erfasst wurden, wobei die längste Störung zwei Zyklen bzw. 2 ms dauerte. Diese gemessenen Werte werden durch einen "Toleranzfaktor" skaliert, der hier beispielsweise 4 betragen kann. Dies bedeutet, dass das System danach automatisch so parametriert wird, dass 20 Störungen pro 1000 Taktzyklen bzw. die vierfache bislang gemessene maximale Störungsdauer, also 8 ms, als Grenzwerte für die Erzeugung bzw. Bereitstellung einer zusätzlichen Ereignismeldung registriert werden.

In einem zweiten Beispiel für die Überwachung eines Zustandsparameters soll nun auf die Kommunikationsbeziehung zwischen den Automatisierungskomponenten AK1, AK2 eingegangen werden. Dabei kann beispielsweise angenommen werden, dass eine zeitkritische Meldung, die zwischen diesen beiden Automatisierungskomponenten AK1, AK2 mittels des Netzwerkes NW übertragen werden soll, in dem Netzwerk NW nicht länger als 100 ms verzögert werden darf. Aus diesem Grund wird durch die Automatisierungskomponente AK1 (alternativ kann dies auch durch die Automatisierungskomponente AK2 oder durch beide geschehen) die Auslastung des Netzwerkes NW überwacht werden. Dies bedeutet, dass während einer Übermittlung eines Datenpaketes in dem Netzwerk NW kein anderes Datenpaket übermittelt werden kann, da ansonsten eine Kollision geschehen würde, die beide zu übermittelnden Datenpakete unbrauchbar machen würde und eine dementsprechende wiederholte Übertragung der Datenpakete auslösen würde. Hinsichtlich des zuvor geschilderten Kriteriums, dass eine wichtige zu übertragende Nachricht, also ein wichtiges zu übertragendes Datenpaket nicht länger als 100 ms verzögert werden darf, bedeutet dies, dass kein anderweitiges Datenpaket das Netzwerk NW länger als 100 ms belegen und somit blockieren darf. Sollte also ein (etwaiger, hier nicht dargestellter) weiterer Kommunikationsteilnehmer des Netzwerkes NW solche Datenpakete übertragen, die zu groß sind und deren Übertragungsdauer damit die Zeitgrenze von 100 ms überschreitet, wird dies durch die Automatisierungskomponente AK1 festgestellt, wonach eine Ereignismeldung erzeugt wird, die beispielsweise dem Bedien- und Beobachtungsgerät BB signalisiert, dass die Verbindung in dem Netzwerk NW nicht mehr den Anforderungen entspricht und somit eine zeitgerechte Übermittlung von wichtigen Nachrichten zwischen den Automatisierungskomponenten AK1, AK2 nicht mehr in jedem Fall garantiert werden kann. Natürlich kann die durch das Kriterium der maximalen Verzögerungszeit vorgegebene Grenze auch mit einem anderen Grenzwert kombiniert werden, beispielsweise dahingehend, dass eine solche Beeinträchtigung innerhalb 1 s zweimal toleriert werden kann oder dergleichen.

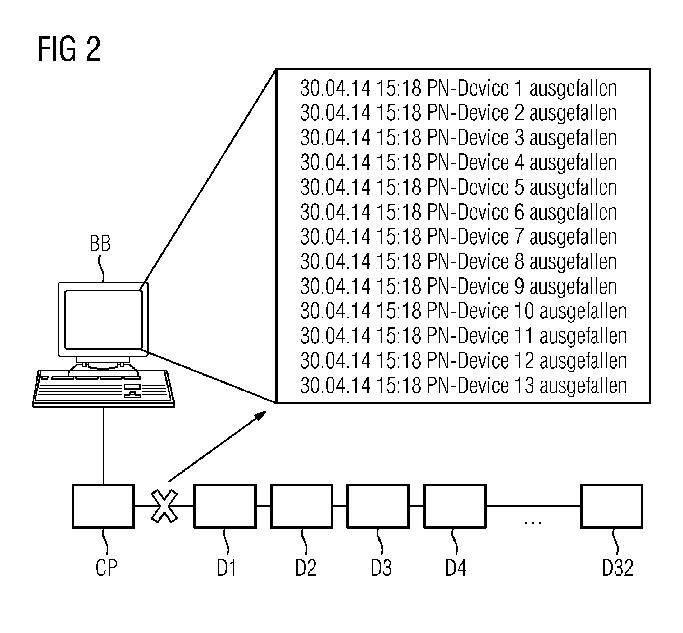

Die Figuren 2 - 4 zeigen eine weitere Automatisierungsanordnung in stark vereinfachter, schematischer Darstellung. Eine Reihe von Automatisierungskomponenten D1, ..., D13 ("Devices") ist an einem Kommunikationsprozessor CP angeschlossen, der mit diesem Automatisierungskomponenten D1, ..., D13 und mit dem Bedien- und Beobachtungsgerät BB mittels eines Profinet kommuniziert.

In der Figur 2 ist durch ein "X" symbolisiert, dass ein sporadischer Fehler, nämlich ein Wackelkontakt am Ethernetport, temporär die Verbindung des Kommunikationsprozessors CP mit allen angeschlossenen Automatisierungskomponenten D1, ..., D13 unterbricht. Neben dem ursächlichen Fehler, nämlich der Leitungsunterbrechung, werden auch viele Folgefehler, nämlich die Nicht-Erreichbarkeit der Automatisierungskomponenten D1, ..., D13, auf dem Bildschirm des Bedien- und Beobachtungsgerätes BB dargestellt. Aus Sicht des Bedien- und Beobachtungsgerätes BB sind die betroffenen Automatisierungskomponenten jedoch ausgefallen, weil sie nicht über das Kommunikationsnetz erreichbar sind. Aufgrund der begrenzten Anzeigekapazität eines Bildschirmes ist die ursprüngliche Fehlermeldung des ursächlichen Fehlers, nämlich der Leitungsbruch am Ethernetport, für einen Benutzer überhaupt nicht mehr sichtbar.

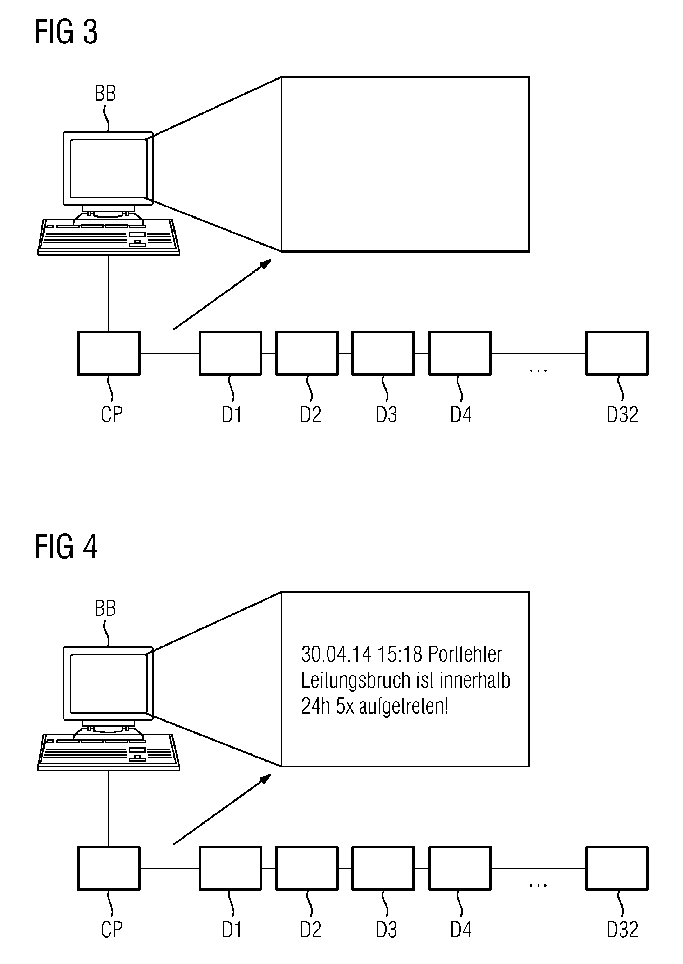

In der Figur 3 sei nun davon ausgegangen, dass die Unterbrechung nicht mehr besteht. Dies hat zur Folge, dass alle Fehlermeldungen, die nunmehr obsolet sind, nicht mehr angezeigt werden. Daher ist der Bildschirminhalt des Bedien- und Beobachtungsgerätes BB in der Figur 3 leer.

In der Figur 4 ist nun der erfindungsgemäße Fall dargestellt, dass es sich bei dem Fehler um einen wiederkehrenden Fehler handelt, dessen Häufigkeit in einer bestimmten Zeitspanne (hier: 24 h) gezählt wird. Im vorliegenden Fall sei davon ausgegangen, dass mit 5 Fehlern in 24 h ein erlaubter Grenzwerte überschritten worden ist, so dass eine entsprechende Ereignismeldung generiert und auf dem Bedien- und Beobachtungsgerät BB zur Anzeige gebracht wird. Im vorliegenden Fall wird diese Ereignismeldung von dem Kommunikationsprozessor CP erstellt; in alternativen Ausführungsformen kann beispielsweise auch das Bedien- und Beobachtungsgerät BB die diesbezügliche Auswertung und Bereitstellung der Ereignismeldung (zusätzliche Ereignismeldung) vornehmen. Eine Bedienperson kann dies nun zum Anlass nehmen, die Fehlerursache (schlechter Kontakt) beheben zu lassen.

Während im vorangegangenen Beispiel eine Anzahl von Leitungsunterbrechungen je Zeiteinheit oder bezogen auf eine Anzahl Zyklen erfasst wurde, können auch statistische Daten einer Kommunikationsverbindung ausgewertet werden. So kann beispielsweise dann eine zusätzliche Ereignismeldung generiert werden, wenn in einem paketvermittelndem Netzwerk (Ethernet, WLAN oder dgl.) eine bestimmte Paketfehlerrate überschritten worden ist. Da solche Daten ohnehin in vielen Komponenten erfasst werden, sind dazu keine zusätzlichen Überwachungsmittel erforderlich.

Eine Bedienperson oder ein Instandhalter wird über separate Hinweise, also eine zusätzliche Ereignismeldung oder "Maintenance Alert", darauf aufmerksam gemacht, dass in einem bestimmten Zeitraster oder Zeitintervall ein bestimmter Fehler häufiger aufgetreten ist. Dabei kann eine Bedienperson durch Parametrierung des Zeitrasters und durch die Beeinflussung der Grenzwerte und anderer Parameter die Überwachung derart selbst definieren, dass die Überwachungsfunktion bzw. die Ereignismeldung an seine Belange angepasst wird. Dabei werden nicht nur Grenzwerte, beispielsweise eines analogen Sensorwertes, auf einer Baugruppe überwacht, sondern die entsprechenden Ereignisse werden im Kontext ihrer Überwachung bewertet. Beispielsweise erhält eine Bedienperson auf Wunsch zusätzlich eine Meldung, wenn eine bestimmte Fehlermeldung oder ein entsprechendes Fehlerereignis innerhalb eines Zeitraumes mehrfach vorgekommen und auch wieder "verschwunden" ist, beispielsweise eine Kanalfehlermeldung "Leitungsbruch". Dadurch wird die Akzeptanz einer Systemdiagnose erhöht, weil eine Bedienperson nicht durch unnötige Fehlermeldungen in Anspruch genommen wird und zumindest im Wiederholungsfall besser zwischen ursächlichen Fehlern und Folgefehlern unterschieden werden kann.

## Patentansprüche

1. Verfahren zur Generierung einer Ereignismeldung durch eine Automatisierungskomponente (AK1, AK2) einer industriellen Automatisierungsanordnung,
wobei zumindest ein Zustandsparameter der Automatisierungsanordnung durch die Automatisierungskomponente (AK1, AK2) überwacht wird,
wobei für den Zustandsparameter zumindest ein Grenzwert definiert wird, und
wobei bei einer Verletzung des Grenzwertes die Ereignismeldung erzeugt und für eine Meldeeinrichtung bereitgestellt wird,
**dadurch gekennzeichnet,**
**dass** für den Zustandsparameter eine maximale Häufigkeit und/oder eine Maximaldauer der Verletzung des Grenzwertes definiert wird, wobei die Ereignismeldung dann erzeugt wird, wenn in dem Zeitintervall die maximale Häufigkeit und/oder die Maximaldauer der Verletzung des Grenzwertes erreicht oder überschritten wird.

2. Verfahren nach Patentanspruch 1,
**dadurch gekennzeichnet,**
**dass** die maximale Häufigkeit und/oder eine Maximaldauer der Verletzung des Grenzwertes auf ein Zeitintervall oder auf eine definierte Anzahl Taktzyklen der Automatisierungskomponente bezogen werden.

3. Verfahren nach Patentanspruch 1 oder 2,
**dadurch gekennzeichnet,**
**dass** die erzeugte und bereitgestellte Ereignismeldung eine zusätzliche Ereignismeldung ist, wobei bei jeder Verletzung des Grenzwertes eine Fehlermeldung erzeugt und bereitgestellt wird, und wobei die Fehlermeldung und die zusätzliche Ereignismeldung anhand einer jeweiligen Kennung unterscheidbar sind.

4. Verfahren nach einem der vorhergehenden Patentansprüche,
**dadurch gekennzeichnet,**
**dass** eine Anzahl Zustandsparameter und zugeordnete Grenzwerte überwacht werden, wobei die Zustandsparameter und die zugehörigen Grenzwerte einer Anzahl Fehlertypen zugordnet werden.

5. Verfahren nach Patentanspruch 4,
**dadurch gekennzeichnet,**
**dass** für jeden Fehlertyp das Zeitintervall und/oder die maximale Häufigkeit und/oder die Maximaldauer der Verletzung der jeweiligen Grenzwerte separat definierbar ist.

6. Verfahren nach einem der vorhergehenden Patentansprüche,
**dadurch gekennzeichnet,**
**dass** als der zumindest eine Zustandsparameter eine Verfügbarkeit oder eine Blockierung einer Kommunikationsverbindung (NW) oder eines Segmentes eines Datennetzes überwacht wird.

7. Verfahren nach Patentanspruch 6,
**dadurch gekennzeichnet,**
**dass** die Maximaldauer der Verfügbarkeit bzw. der Belegung oder Blockierung der Kommunikationsverbindung (NW) oder des Netzsegmentes derart bemessen wird, dass in dem Zeitintervall eine Mindestverfügbarkeit der Kommunikationsverbindung (NW) oder eine mindeste verfügbare Bandbreite des Netzsegmentes gegeben ist.

8. Verfahren nach einem der vorhergehenden Patentansprüche,
**dadurch gekennzeichnet,**
**dass** die Ereignismeldung an ein Bedien- und Beobachtungsgerät (BB) der industriellen Automatisierungsanordnung übermittelt oder diesem zum Abruf bereitgestellt wird.

9. Verfahren nach einem der vorhergehenden Patentansprüche,
**dadurch gekennzeichnet,**
**dass** die auf das Zeitintervall bezogenen Verletzungen des Grenzwertes während eines ordnungsgemäßen Probe- oder Trainingsbetriebes der Automatisierungsanordnung ermittelt werden, wobei durch Skalierung der dabei ermittelten durchschnittlichen und/oder maximalen Häufigkeit und/oder Dauer der Verletzung des Grenzwertes mit einem Toleranzfaktor automatisch die maximale Häufigkeit und/oder Maximaldauer für einen Produktivbetrieb der Automatisierungsanordnung ermittelt wird.

10. Automatisierungskomponente (AK1, AK2) zum Einsatz in einer industriellen Automatisierungsanordnung,
wobei die Automatisierungskomponente (AK1, AK2) zur Überwachung zumindest eines Zustandsparameters hinsichtlich zumindest eines Grenzwertes eingerichtet ist,
**dadurch gekennzeichnet,**
**dass** die Automatisierungskomponente (AK1, AK2) mit einer Überwachungssoftware zur Überwachung des zumindest einen Zustandsparameters und zur Generierung zumindest einer Ereignismeldung resultierend aus der Überwachung gemäß einem der vorstehend beschriebenen Verfahren ausgestattet ist.
